Europäisches Patentamt

European Patent Office

Office européen des brevets

(11) Veröffentlichungsnummer: **0 257 661 B1**

(12) **EUROPÄISCHE PATENTSCHRIFT**

(45) Veröffentlichungstag der Patentschrift: **15.01.92**

(21) Anmeldenummer: **87112592.8**

(22) Anmeldetag: **28.08.87**

(51) Int. Cl.⁵: **F16G  13/06**

(54) **Rollenkette.**

(30) Priorität: **29.08.86 DE 3629410**

(43) Veröffentlichungstag der Anmeldung:
**02.03.88 Patentblatt  88/09**

(45) Bekanntmachung des Hinweises auf die
Patenterteilung:
**15.01.92 Patentblatt  92/03**

(84) Benannte Vertragsstaaten:
**DE ES FR GB IT**

(56) Entgegenhaltungen:
**DE-C- 3 238 368**
**US-A- 2 056 597**
**US-A- 2 117 169**
**US-A- 2 168 277**

(73) Patentinhaber: **Joh. Winklhofer & Söhne**
**Albert-Rosshaupter-Strasse 53**
**W-8000 München 70(DE)**

(72) Erfinder: **Biedermann, Adam, Dipl.-Ing.**
**Gröbenbachweg 41**
**W-8039 Puchheim(DE)**
Erfinder: **Staudinger, Siegfried**
**Kunstmannstrasse 28**
**W-8000 München 50(DE)**

(74) Vertreter: **Patentanwälte Grünecker, Kinkel-**
**dey, Stockmair & Partner**
**Maximilianstrasse 58**
**W-8000 München 22(DE)**

Rank Xerox (UK) Business Services

**Beschreibung**

Die Erfindung betrifft eine Rollenkette der im Oberbegriff des Patentanspruchs 1 angegebenen Art.

Bei einer aus der US-A-2168 277 bekannten Rollenkette dieser Art weisen die Hülsen im Bereich der durch das Spiel zwischen den Rollen und den Innenlaschen vorgegebenen Spalte Ölzuführöffnungen auf. Im Betrieb können sich die Rollen auf den Hülsen zur einen oder zur anderen Seite verlagern, wodurch der Öldurchtritt zur Ölzufuhröffnung abgesperrt wird. Unter ungüstigen Betriebszuständen kann eine einwandfreie Schmierung nicht gewährleistet werden.

Bei einer aus der US-A-2056 597 bekannten Rollenkette ist innen in der Innenlasche eine in der durch die beiden Gelenke eines Kettengliedes definierten Richtung verlaufende Nut eingeformt, die an der Ölzuführöffnung der Hülse endet. Die Nut hat in Umfangsrichtung der Rolle eine Breite, die nur einem Bruchteil der Umfangserstreckung der Stirnseite der Rolle entspricht. Abgesehen davon, daß die Hülse bei der Herstellung der Rollenkette exakt in der Innenlasche positioniert werden muß, ist die Schmierwirkung der Nut unter ungünstigen Betriebsbedingungen unbefriedigend.

Aus dem Katalog "REX 700" 3. Ausgabe, USA 1967, der Firma Rex Chainbelt Inc., Milwaukee, USA, Seite 20, ist eine Rollenkettenkonstruktion bekannt, bei der die Büchsen in ihrer Längsmitte linsenförmige Ölzuführöffnungen besitzen. Da die Rollen die Büchsen umgeben und als geschlossene Zylinder, ggf. mit einer engen Längsfuge, ausgebildet sind und zwischen den Innenlaschen mit verhältnismäßig geringem Spiel sitzen, ist unter ungünstigen Betriebszuständen keine einwandfreie Schmierung der Gelenke gewährleistet, weil das Öl keinen ungehinderten Zutritt zu den Ölzuführöffnungen der Büchsen findet. Darunter leidet die Lebensdauer der Rollenketten.

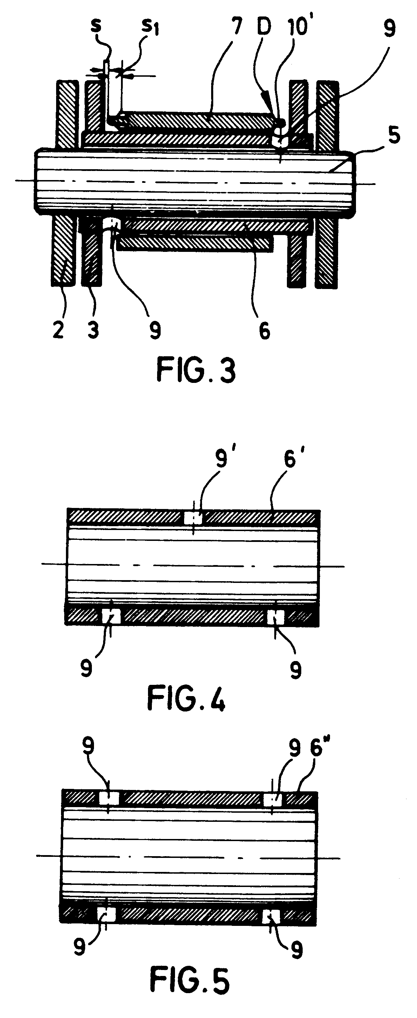

Aus der DE-A-3238 368, Fig. 3, ist ebenfalls eine Rollenkette der eingangs genannten Art bekannt, bei der verschiedene konstruktive Lösungen für Ölzuführöffnungen der Büchsen erläutert werden. Zusätzlich ist die Möglichkeit angedeutet, auch in den Rollen radiale Ölzuführöffnungen vorzusehen. Wie und wo die Ölzuführöffnungen in den Rollen angeordnet sein sollen, wird nicht gezeigt.

Der Erfindung liegt die Aufgabe zugrunde, eine Rollenkette der eingangs genannten Art zu schaffen, bei der auch unter ungünstigen Betriebsbedingungen eine ausreichende Schmierung der Gelenke sichergestellt ist.

Die gestellte Aufgabe wird erfindungsgemäß durch die im kennzeichnenden Teil des Patentanspruchs 1 angegebenen Merkmale gelöst.

Bei dieser Ausbildung wird aufgrund des in Umfangsrichtung der Rolle langen und durch das Distanzelement in seiner Mindestweite begrenzten Spalts eine großzügige Ölzufuhr zur Zuführöffnung der Hülse sichergestellt, ohne daß bei der Positionierung der Hülse in der Innenlasche besondere Vorsicht aufgebracht werden müßte. Aufgrund der Relativbewegungen zwischen der Rolle und der Innenlasche ist immer wieder der direkte Zugang zur Ölzuführöffnung der Hülse frei.

Sofern die Rollenkette im Ölbad läuft wird das Öl zielsicher in die Ölzuführöffnung gefördert, wobei auch der Berührungsbereich zwischen der Rolle und der Hülse großzügig mit Öl versorgt wird. Werden hingegen gezielte Strahlen zum Schmieren eingesetzt, so treffen diese durch den Spalt direkt in die Ölzuführöffnung. Es läßt sich so eine wirksame Zirkulation bzw. ein spürbarer Öldurchsatz durch das Gelenk erzielen, wodurch eine Kühlung und eine wirksame Abführung von Abriebpartikelchen auch unter ungünstigen Betriebsbedingungen sichergestellt ist. Bei der Schmierung mit Strahlen kann die Ölzufuhr gering dosiert werden, weil sichergestellt ist, daß jeder Strahl direkt in den Spalt trifft und sein Ziel erreicht. Es wird auf diese Weise auch unter schwierigen Betriebsbedingungen eine zuverlässige Schmierung des Gelenks sichergestellt.

Eine zweckmäßige und baulich einfache Ausführungsform gemäß Anspruch 2 hervor. Das Distanzelement läßt sich mit geringem Aufwand bereits bei der Herstellung der Rolle anbringen.

Eine alternative, baulich ebenfalls einfache Ausführungsform geht weiterhin aus Anspruch 3 hervor. Hierbei wird das Distanzelement bei der Herstellung der Innenlasche angeformt.

Eine weitere, alternative Ausführungsform geht aus Anspruch 4 hervor. Bei dieser Ausbildung wird bei gegebenem Abstand zwischen den Innenlaschen die Rolle kürzer ausgebildet und ein oder zwei Distanzringe eingefügt, die für das Offenhalten des Ölzugangsweges sorgen.

Eine zweckmäßige Ausführungsform geht weiterhin aus Anspruch 5 hervor. Trotz der radialen Durchlässe für das Öl besitzt der Distanzring noch genügend Tragflächen zum großflächigen Verteilen der Kräfte, die in axialer Richtung, ggf., von der Rolle auf die Innenlasche zu übertragen sind.

Eine weitere, günstige Ausführungsform geht aus Anspruch 6 hervor. Derartige gewellte Ringe sind handelsüblich und preiswert.

Baulich einfach ist die Ausführungsform von Anspruch 7, weil ein solcher Block herstellungstechnisch einfach auszubilden ist.

Alternativ dazu sind auch die Ausführungsvarianten gemäß Anspruch 8 zweckmäßig.

Eine weitere, alternative Ausführungsform geht schließlich aus Anspruch 9 hervor. Hier wird das Distanzelement bereits bei der Herstellung der Innenlasche angeformt, und zwar aus dem Material der Innenlasche.

Damit schließlich auch unter ungünstigen Betriebsbedingungen die Wahrscheinlichkeit so gering wie möglich ist, daß das Distanzelement die Ölzufuhr stört, ist die Maßgabe von Anspruch 10 wichtig. Ideale Voraussetzungen wären geschaffen, wenn das Distanzelement nur punktuell wirksam wäre. Aus Gründen einer ausreichenden Standzeit der Rollenkette wird jedoch eine flächige Anlage des Distanzelementes vorgesehen, bei der aber nur eine in Umfangsrichtung gesehene Breite des Distanzelementes konzipiert ist, bei der die Ölzufuhr - wenn überhaupt - nur in vernachlässigbarem Maße gestört werden kann.

Anhand der Zeichnung werden Ausführungsformen des Erfindungsgegenstandes erläutert. Es zeigen:

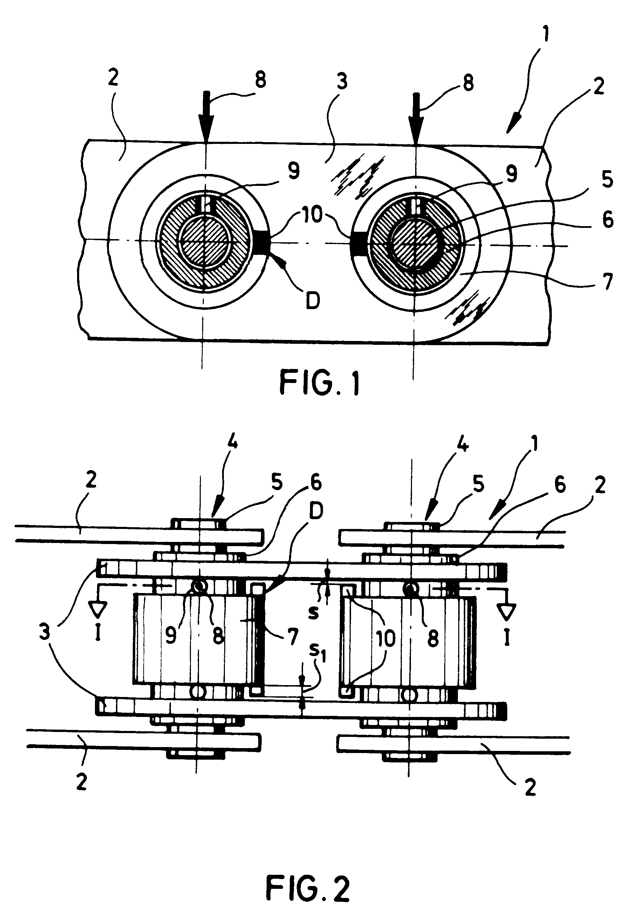

Fig. 1
eine erste Ausführungsform einer Rollenkette, geschnitten in der Ebene I-I von Fig. 2,
Fig. 2
eine Draufsicht auf die Rollenkette von Fig. 1,
Fig. 3
einen Schnitt durch eine weitere Ausführungsform,
Fig. 4 und 5
Detailschnitte weiterer Ausführungsformen,
Fig. 6
eine Draufsicht auf eine Rolle, die bei den Ausführungsformen der Fig. 1 bis 5 verwendbar ist und mehrere Detailvariationen andeutet,
Fig. 7
einen Teilschnitt durch eine weitere Ausführungsform,
Fig. 8
eine Teilansicht einer weiteren Ausführungsform,
Fig. 9
eine Ansicht eines abgeänderten Details, und
Fig. 10a, 10b und 10c
weitere Detailvarianten, jeweils in Draufsicht und im Schnitt.

Gemäß den Fig. 1 und 2 besteht eine Rollenkette aus einer Vielzahl jeweils paarweise angeordneter Außenlaschen 2 und Innenlaschen 3, die miteinander über Gelenke 4 verbunden sind. Jedes Gelenk besteht aus einem Gelenkzapfen 5, der mit den Außenlaschen undrehbar verbunden ist, ferner aus einer kürzer als der Gelenkzapfen 5 ausgebildeten, zylindrischen Buchse 6 auf dem Gelenkzapfen 5, die mit den Innenlaschen undrehbar verbunden ist, und schließlich aus einer Rolle 7, die auf dem Außenumfang der Büchse 6 drehbar sitzt und eine axiale Länge besitzt, mit der zu beiden angrenzenden Innenlaschen 3 ein die ungehinderte Drehbewegung der Rolle 7 relativ zur Büchse 6 zulassendes Spiel s eingehalten wird.

Im Betrieb läuft die Rollenkette 1 entweder in einem Ölbad oder sie wird durch gerichtete Ölstrahlen 8 (Fig.1) geschmiert. Zur Schmierung der Gelenke 4 sind bei dieser Ausführungsform in den Büchsen 6 benachbart zu den Innenlaschen 3 als Bohrungen ausgebildete Ölzuführöffnungen 9 vorgesehen. An den Stirnseiten jeder Rolle 7 sind Distanzelemente D angebracht, die hier die Form rechteckiger Blöcke 10 haben, die sich in Richtung zur angrenzenden Innenlasche 2 erstrecken und einen Spalt S1 mit einer Mindestweite freihalten, durch den jeder Ölstrahl 8 beim Vorbeilaufen der Rollenkette 1 gezielt in eine Ölzuführöffnung 9 trifft. Dabei können über den Umfang der Rolle 7 verteilt mehrere Distanzelemente 10 vorgesehen sein. Es ist die Umfangserstreckung aller vorgesehenen Distanzelemente kleiner als die Umfangserstreckung des durch die Distanzelemente in seiner Mindestweite begrenzten Spaltes S1. Für eine ausreichende Schmierung des Gelenkes 4 würde es ausreichen, wenn nur zwischen einer Stirnseite der Rolle 7 und der angrenzenden Innenlasche der Spalt S1 vorgesehen wäre.

Bei der Ausführungsform der Fig. 3 sind die Distanzelemente D an der Rolle 7 durch im Verhältnis zur radialen Dicke der Rolle 7 dünnere Vorsprünge 10' an den Stirnseiten der Rolle gebildet. Die Ölzuführöffnungen 9 der Büchse 6 sind in bezug auf die Achse des Gelenkes zueinander versetzt, dabei jedoch auf den Spalt S1 ausgerichtet. Zwischen den Distanzelementen und den angrenzenden Innenlaschen 3 liegt auch das Spiel S vor, das für die ungehinderte Drehbeweglichkeit der Rolle 7 auf der Büchse 6 zweckmäßig ist.

Aus den Fig. 4 und 5 sind im Schnitt unterschiedliche Ausführungsformen von Büchsen 6' und 6″ erkennbar. Bei der Ausführungsform der Fig. 4 sind beispielsweise entlang einer erzeugenden Linie des Zylindermantels der Büchse 6' zwei Ölzuführöffnungen 9 angeordnet, die in der Rolle der Kette zweckmäßigerweise wie bei Fig. 3 auf den Spalt S1 ausgerichtet sind. In der Mitte zwischen diesen beiden Ölzuführöffnungen 9 liegt an der gegenüberliegenden Seite des Mantels der Büchse 6' eine weitere Ölzuführöffnung, durch die das Öl auch in dem Berührungsbereich zwischen der Rolle und der Büchse gezielt gebracht wird.

Bei der Ausführungsform von Fig. 5 sind nahe den beiden Enden der Büchse 6″ mehrere, z.B. in einer Umfangsreihe angeordnete, Ölzuführöffnungen 9 vorgesehen, um eine verstärkte Ölzirkulation und Schmierung des Gelenkes sicherzustellen.

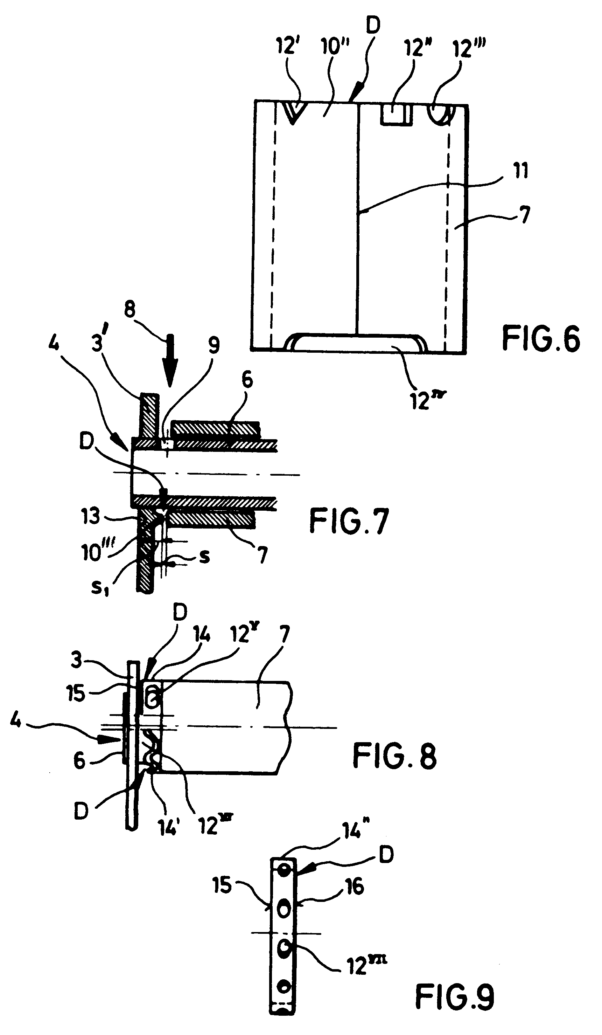

Figur 6 deutet eine Rolle 7 an, die für die vorerwähnten Ausführungsformen der Rollenketten brauchbar ist. Die Rolle 7 ist beispielsweise aus einem Stahlblechabschnitt gebogen, so daß sie eine längsverlaufende Stoßfuge 11 besitzt. In die beiden Stirnseiten der derart gebildeten Rolle 7 sind Einkerbungen dreieckiger, viereckiger oder runder Gestalt eingeformt, die radiale Durchlässe 12′, 12″, 12‴ oder 12$^{IV}$ bilden. Zwischen den Einkerbungen sind als Distanzelemente D entsprechende Vorsprünge 10″ entstanden, mit denen sich die Rolle ggf. an den Innenlaschen abstützt.

Figur 7 zeigt eine zylindrische Rolle 7 mit ebener Stirnseite. Zur Aufrechterhaltung der Mindestweite des Spaltes S1 ist bei dieser Ausführungsform in die Innenlasche 3′ eine warzenartige Einprägung 13 eingebracht, die einen von der Innenlasche 3′ zur Rolle 7 vorspringenden Vorsprung 10‴ bildet. Zwischen dem Vorsprung 10‴ und der Stirnseite der Rolle 7 liegt bei normalem Lauf das Spiel s vor, das für die ungehinderte Drehbeweglichkeit der Rolle 7 auf der Büchse 6 sorgt. In der Büchse 6 ist wiederum eine Ölzuführöffnung 9 auf den Spalt S1 ausgerichtet, so daß der gerichtete Ölstrahl 8 ungehindert bis ins Innere der Büchse 6 eindringen kann.

Gemäß Fig. 8 ist bei jedem Gelenk zwischen wenigstens einer Stirnseite der Rolle 7 und der Innenlasche 3 ein Distanzring 14 bzw. 14′ eingesetzt, der das Distanzelement D darstellt. Der Distanzring 14 weist eine glatte äußere Stirnseite 15 auf, mit der er an der Innenlasche 3 zur Anlage kommen kann. In seiner anderen Stirnseite sind radiale Durchlässe 12$^{V}$ ausgeformt, die über den Umfang gesehen, einen Spalt definieren, dessen Mindestweite festliegt.

Anstelle des Distanzringes 14 könnte auch ein Distanzring 14′ verwendet werden, der als in Umfangsrichtung gewellter Ring ausgebildet ist, so daß er beidseitige radiale Durchlässe 12$^{VI}$ für das Öl freihält.

Gemäß Fig. 9 könnte auch ein Distanzring 14″ verwendet werden, der als Zylinder mit geschlossenen Stirnseiten 15 und 16 ausgebildet ist und über den Umfang verteilte radiale Durchlässe 12$^{VII}$ für das Öl aufweist. Der Distanzring 14″ bildet das Distanzelement, das für den ungehinderten Ölzutritt zum jeweiligen Gelenk sorgt. Zweckmäßigerweise sind bei den Fig. 8 und 9 die in der nur angedeuteten oder nicht gezeigten Büchse 6 vorgesehenen Ölzuführöffnungen so ausgelegt, daß wenigstens eine auf den durch den Distanzring 14′ oder 14″ sichergestellten Ölzugang ausgerichtet ist.

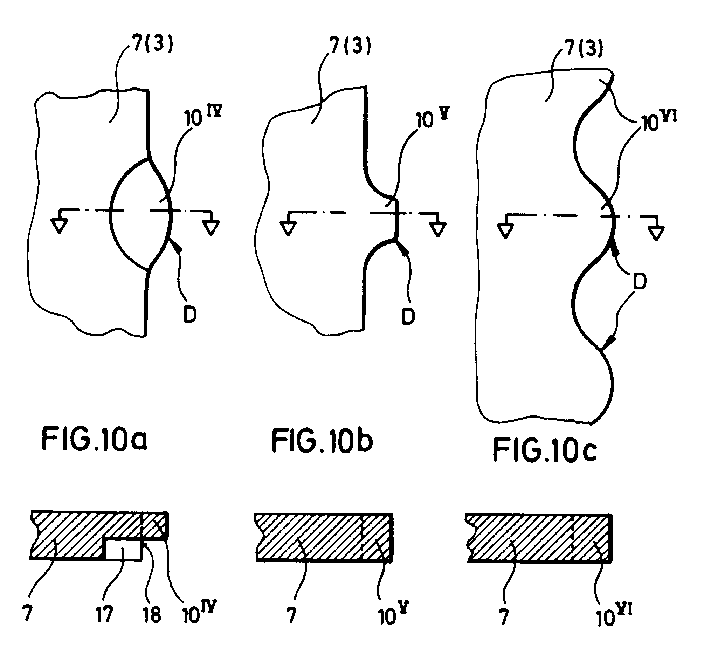

In den Fig. 10a, 10b und 10c sind weitere Ausführungsvarianten von Distanzelementen D erkennbar, die hier einstückig an der Rolle 7 angeformt sind. Alternativ könnten sie jedoch auf den Innenlaschen 3 vorgesehen sein. Gemäß Fig. 10a ist das Distanzelement D ein in einer Draufsicht konvexer Vorsprung 10$^{IV}$, der durch Kaltverformung, z.B. durch Quetschen oder Prägen von einer Seite der Rolle 7 gebildet wurde. Das in den Vorsprung 10$^{IV}$ verdrängte Material hat einen Hohlraum 17 hinter der Stirnseite der Rolle 7 entstehen lassen, was den Vorteil hat, daß das eindringende Öl leicht in die Zuführöffnung der Büchse 6 gelangt, selbst wenn sich diese bis hinter die Stirnseite 18 der Rolle 7 erstreckt.

Der bei der Ausführungsform von Fig. 10b z.B. durch Ziehen, Prägen oder Stanzen gebildete Vorsprung 10$^{V}$ erstreckt sich über die ganze Dicke der Rolle 7.

Bei der Ausführungsform der Fig. 10c ist die Stirnseite der Rolle wellenförmig gestaltet, so daß aufeinanderfolgende kuppenförmige Vorsprünge 10$^{VI}$ gebildet werden, die die Distanzelemente D darstellen. Die dazwischenliegenden konkaven Täler gestatten dem Öl den Zutritt zur Büchse 6 bzw. deren Ölzuführöffnungen.

**Patentansprüche**

1. Rollenkette (1), die mit Schmieröl beaufschlagt wird, mit Außen- und Innenlaschen (2, 3, 3′), die über aus Bolzen (5) und Hülsen (6) bestehende, von Rollen (7) umgebene Gelenke (4) miteinander verbunden sind, mit einem in Umfangsrichtung der Rolle (7) begrenzten Spalt (S1) zwischen wenigstens einer Stirnseite der Rolle (7) und der benachbarten Innenlasche (3, 3′), und mit wenigstens einer auf den Spalt ausgerichteten, radialen Ölzuführöffnung (9) in jeder Hülse (6), **dadurch gekennzeichnet,** daß der durch wenigstens ein zwischen der Stirnseite der Rolle (7) und der Innenlasche (3, 3′) vorgesehenes Distanzelement (D) gebildete Spalt (S1) in seiner Gesamtlänge in Umfangsrichtung länger als die Umfangserstreckung des Distanzelementes (D) bzw. der vorgesehenen Distanzelemente (D) ist.

2. Rollenkette nach Anspruch 1, **dadurch gekennzeichnet,** daß als Distanzelement (D) wenigstens ein an der Stirnseite der Rolle (7) von der Rolle (7) in Richtung zur Innenlasche (3) vortretender Vorsprung (10, 10′, 10$^{IV}$, 10$^{V}$, 10$^{VI}$) vorgesehen ist.

3. Rollenkette nach Anspruch 1, **dadurch gekennzeichnet,** daß als Distanzelement (D) wenigstens ein in Richtung zur Stirnseite der Rolle (7) vortretender Vorsprung (10‴) an der Innenlasche (3′) angeordnet ist.

4. Rollenkette nach Ansrpuch 1, **dadurch gekennzeichnet,** daß als Distanzelement (D) zwischen der Rolle (7) und der Innenlasche (3) ein Distanzring (14, 14′, 14″) mit radialen, den Spalt (S1) definierenden Durchlässen (12$^{V}$, 12$^{VI}$, 12$^{VII}$) angeordnet ist.

5. Rollenkette nach Anspruch 4, **dadurch gekennzeichnet,** daß der Distanzring (14, 14′)

ein- oder beidseitig radiale Durchlässe ($12^V$, $12^{VI}$) aufweist.

6. Rollenkette nach den Ansprüchen 4 und 5, **dadurch gekennzeichnet, daß** der Distanzring (14') ein gewellter Ring ist, der an beiden Seiten seiner Wellungen den Spalt (S1) definierende radiale Durchlässe ($12^{VI}$) aufweist.

7. Rollenkette nach den Ansprüchen 1 bis 3, **dadurch gekennzeichnet, daß** jeder Vorsprung (10, 10', 10''', $10^{IV}$, $10^V$, $10^{VI}$) als annähernd rechteckiger oder gerundeter, vorzugsweise durch Kaltverformung wie Prägen, Quetschen oder Ziehen hergestellter Block ausgebildet ist.

8. Rollenkette nach den Ansprüchen 1 und 2, **dadurch gekennzeichnet, daß** die Stirnseite der Rolle (7) mit über den Umfang verteilten Einkerbungen dreieckiger, runder oder viereckiger Gestalt ausgestattet ist.

9. Rollenkette nach Anspruch 1, **dadurch gekennzeichnet, daß** jeder Vorsprung (10''') eine an der Innenseite vortretende, auf die Stirnseite der Rolle (7) ausgerichtete warzenartige Ausprägung (13) der Innenlasche (3') ist.

10. Rollenkette nach wenigstens einem der Ansprüche 1 bis 9, **dadurch gekennzeichnet, daß** die Umfangserstreckung des Distanzelementes (D) zur in Umfangsrichtung des Spaltes (S1) gesehenen Gesamtlänge des Spaltes (S1) annähernd in einem Verhältnis von 1:16 steht.

## Claims

1. Roller chain (1) which is acted upon by lubricating oil, with outer and inner plates (2, 3, 3') which are connected to each other by joints (4) consisting of pins (5) and bushes (6) and surrounded by rollers (7), with a gap (S1) defined in the circumferential direction of the roller (7) between at least one end face of the roller (7) and the adjacent inner plate (3, 3'), and with at least one radial oil supply opening (9) in each bush (6) aligned with the gap, characterised in that the gap (S1) formed by at least one distance element (D) provided between the end face of the roller (7) and the inner plate (3, 3') is longer in its total length in the circumferential direction than the circumferential dimension of the distance element (D) or the distance elements (D) provided.

2. Roller chain according to claim 1, characterised in that at least one projection (10, 10', $10^{IV}$,

$10^V$, $10^{VI}$) projecting at the end face of the roller (7) from the roller (7) in a direction towards the inner plate (3) is provided as the distance element (D).

3. Roller chain according to claim 1, characterised in that at least one projection (10''') projecting in a direction towards the end face of the roller (7) is arranged on the inner plate (3') as the distance element (D).

4. Roller chain according to claim 1, characterised in that a distance ring (14, 14', 14'') with radial passages ($12^V$, $12^{VI}$, $12^{VII}$) defining the gap (S1) is arranged between the roller (7) and the inner plate (3) as the distance element (D).

5. Roller chain according to claim 4, characterised in that the distance ring (14, 14') comprises radial passages ($12^V$, $12^{VI}$) on one or both sides.

6. Roller chain according to claims 4 and 5, characterised in that the distance ring (14') is a corrugated ring which comprises, on both sides of its corrugations, radial passages ($12^{VI}$) defining the gap (S1).

7. Roller chain according to claims 1 to 3, characterised in that each projection (10, 10', 10''', $10^{IV}$, $10^V$, $10^{VI}$) is constructed as an approximately rectangular or rounded block, preferably formed by cold forming such as stamping, pinching or drawing.

8. Roller chain according to claims 1 and 2, characterised in that the end face of the roller (7) is provided with notches of triangular, round or quadrangular shape distributed over the circumference.

9. Roller chain according to claim 1, characterised in that each projection (10''') is a dimple-like indentation (13) of the inner plate (3'), projecting on the inner side and directed towards the end face of the roller (7).

10. Roller chain according to one or more of claims 1 to 9, characterised in that the circumferential dimension of the distance element (D) is approximately in a ratio of 1:16 to the total length of the gap (S1) seen in the circumferential direction of the gap (S1).

## Revendications

1. Chaîne à rouleaux (1) chargée avec de l'huile de graissage, comportant des joues extérieures et intérieures (2, 3, 3') qui sont reliées les unes aux autres par des articulations (4) entourées de rouleaux (7) et constituées d'axes (5) et de douilles (6), comportant une fente (S1) limitée en direction périphérique du rouleau (7) entre au moins une face frontale dudit rouleau (7) et la joue intérieure adjacente (3, 3'), et comportant au moins dans chaque rouleau un orifice radial (9) d'introduction de l'huile dans chaque douille (6) orienté vers le fente, caractérisée par le fait que la fente (S1) formée par au moins un élément d'écartement (D) prévu entre la face frontale du rouleau (7) et la joue inférieure (3, 3') est plus longue, pour ce qui concerne sa longueur totale en direction périphérique, que l'extension périphérique de l'élément d'écartement (D) ou des éléments d'écartement (D) prévus.

2. Chaîne à rouleaux selon la revendication 1, caractérisée par le fait que pour servir d'élément d'écartement (D) est prévue au moins une projection (10, 10', $10^{IV}$, $10^{V}$, $10^{VI}$) faisant saillie sur la face frontale du rouleau (7) en direction de la joue intérieure (3).

3. Chaîne à rouleaux selon la revendication 1, carcatérisée par le fait que pour servir d'élément d'écartement (D) est disposée sur la joue intérieure (3') au moins une projection (10"') faisant saillie en direction de la face frontale du rouleau (7).

4. Chaîne à rouleaux selon la revendication 1, caractérisée par le fait que pour servir d'élément d'écartement (D) est prévue entre le rouleau (7) et la joue intérieure (3), une bague d'écartement (14, 14', 14") comportant des orifices ($12^{V}$, $12^{V1}$, $12^{VII}$) radiaux définissant la fente (S1).

5. Chaîne à rouleaux selon la revendication 4, caractérisée par le fait que la bague d'écartement (14, 14') présente des orifices de passage ($12^{V}$, $12^{VI}$) radiaux d'un seul ou des deux côtés.

6. Chaîne à rouleaux selon les revendications 4 et 5, caractérisée par le fait que la bague d'écartement (14') est une bague ondulée qui présente sur les deux faces de ses ondulations des orifices de passage ($12^{VI}$) définissant la fente (S1).

7. Chaîne à rouleaux selon l'une quelconque des revendications 1 à 3, caractérisée par le fait que chaque projection (10, 10', 10'", $10^{IV}$, $10^{V}$, $10^{VI}$) est réalisée sous la forme d'un bloc sensiblement parallélépipèdique ou arrondi, fabriqué de préférence par façonnage à froid tel que l'estampage, le sertissage ou l'étirege.

8. Chaîne à rouleaux selon les revendications 1 et 2, caractérisée par le fait que la face frontale du rouleau (7) est munie d'encoches de forme triangulaire, ronde ou carrée réparties sur son pourtour.

9. Chaîne à rouleaux selon la revendication 1, caractérisée par le fait que chaque projection (10"') est un embouti (13) du type verrue réalisé sur la joue intérieure (3') et faisant projection sur sa face interne en direction de la face frontale du rouleau (7).

10. Chaîne à rouleaux selon au moins l'une des revendications 1 à 9, caractérisée par le fait que l'extension périphérique de l'élément d'écartement (D) par rapport à la longueur totale de la fente (S1), vue dans la direction périphérique de ladite fente (S1), se situe sensiblement dans un rapport de 1:16.

FIG.1

FIG.2

7

FIG.3

FIG.4

FIG.5

FIG.6

FIG.7

FIG.8

FIG.9

FIG.10a          FIG.10b          FIG.10c